# EUROPEAN PATENT APPLICATION

(11) **EP 3 511 798 A1**
(43) Date of publication of application: **17.07.2019**
(21) Application number: 19151122.9
(22) Date of filing: 10.01.2019
(51) Int. Cl.: G06F 1/16, H04M 1/02, G07G 1/00, G07F 7/08, G06Q 20/32, H04M 1/22, F21V 8/00

(54) **FOLIO WITH LIGHT GUIDE**

(30) Priority: 10.01.2018 US 201815867323
(71) Applicant: VERIFONE, INC., San Jose, CA 95134 (US)
(72) Inventor: HAMROCK, Gerald Andrew, San Jose, CA California 95138 (US); OROSS, Glen Allen, San Diego, CA California 92129 (US)
(74) Representative: Leonhard, Frank Reimund

(57) **Abstract**

Folios with light guides are disclosed. A folio may include: a back cover comprising an interior surface and an exterior surface; a front cover movably connected to the back cover, the front cover comprising an interior surface, an exterior surface, and at least one edge, the interior surface of the front cover disposed opposite the interior surface of the back cover when the folio is in a closed position; and a light guide comprising a light receiving portion proximal to the interior surface of the front cover and a light emitting portion visible when the folio is in the closed position; wherein the light receiving portion receives light from a light source.

## Description

The present disclosure relates generally to folios, and more particularly, to folios for services such as restaurant services.

Folios are often used to present customers with bills for various services, such as restaurant services. A conventional folio may include folding covers made of leather, vinyl or plastic, for example. A restaurant server may place a bill inside a conventional folio, close it, and hand it to a customer at a dining table or a bar counter, for example. When a closed folio is on a table, however, the server often does not know whether the customer has made a payment until the server takes the folio and opens it. It may be impolite for the server to bother the customer if the customer has not made a payment. Further, when a customer pays with a credit card or other non-cash payment device, the server must take the folio with the card, process the transaction away from the table, and then return with a receipt for the customer to complete.

These and other deficiencies exist. A problem to be solved by the invention is to facilitate payment processes, especially payment processes of customers in a restaurant or a bar.

This problem is solved by a folio according to claim 1 or an apparatus according to claim 9.

Folios with light guides are disclosed. In one embodiment, a folio may include: (1) a back cover comprising an interior surface and an exterior surface; (2) a front cover movably connected to the back cover, the front cover comprising an interior surface, an exterior surface, and at least one edge, the interior surface of the front cover disposed opposite the interior surface of the back cover when the folio is in a closed position; and (3) a light guide comprising a light receiving portion proximal to the interior surface of the front cover and a light emitting portion visible when the folio is in the closed position; wherein the light receiving portion receives light from a light source.

In one embodiment, the light emitting portion of the light guide may be located proximal to at least one edge of the front cover.

In one embodiment, the light emitting portion of the light guide may be located proximal to the exterior surface of the front cover.

In one embodiment, the light emitting portion of the light guide may emit light of a first color to indicate that a payment has been made or a second color to indicate that a payment has not been made.

In one embodiment, the interior surface of the back cover may be configured to receive a point-of-sale (POS) device.

In one embodiment, the light receiving portion of the light guide may be positioned to receive from the POS device light indicative of whether a payment has been made.

In one embodiment, the POS device may include a light source configured to emit light indicative of whether the payment has been made.

In one embodiment, the light source may include a screen.

In one embodiment, the light source may include a light emitting diode (LED) which provides light to the light receiving portion of the light guide on the folio.

In one embodiment, the POS device may comprise a touchscreen device, a keyboard-and-screen device, a wireless device, a rechargeable device, or the like.

According to another embodiment, an apparatus may include: (1) a back cover comprising an interior surface and an exterior surface; (2) a point-of-sale (POS) device on the interior surface of the back cover, the POS device comprising a light source; (3) a front cover movably connected to the back cover, the front cover comprising an interior surface, an exterior surface, and at least one edge, the interior surface of the front cover disposed opposite the POS device when the folio is in a closed position; and (4) a light guide comprising a light receiving portion proximal to the POS device when the folio is in the closed position and a light emitting portion visible when the folio is in the closed position; wherein the light receiving portion receives light from the light source.

In one embodiment, the light emitting portion of the light guide may be located proximal to at least one edge of the front cover.

In one embodiment, the light emitting portion of the light guide may be located proximal to the exterior surface of the front cover.

In one embodiment, the light emitting portion of the light guide may emit light of a first color to indicate that a payment has been made or a second color to indicate that a payment has not been made.

In one embodiment, the light receiving portion of the light guide may be positioned to receive from the POS device light indicative of whether a payment has been made.

In one embodiment, the POS device may include a light source configured to emit light indicative of whether the payment has been made.

In one embodiment, the light source may include a screen.

In one embodiment, the light source may include a light emitting diode (LED).

In one embodiment, the POS device may comprise a touchscreen device, a keyboard-and-screen device, a wireless device, a rechargeable device, or the like.

For a more complete understanding of the present invention, the objects and advantages thereof, reference is now made to the following descriptions taken in connection with the accompanying drawings in which:
- Figure 1: depicts a front perspective view of a folio in an open position capable of receiving a point-of-sale (POS) device according to one embodiment;
- Figure 2: depicts a front perspective view of a folio with a POS device in a partially open position according to one embodiment; and
- Figure 3: depicts a front perspective view of a folio in a closed position according to one embodiment.

The following descriptions provide different configurations and features according to exemplary embodiments. While certain nomenclature and types of devices/hardware are described, other names and devices/hardware usage is possible and the nomenclature provided is done so by way of non-limiting examples only. Further, while particular embodiments are described, it should be appreciated that the features and functions of each embodiment may be combined in any manner within the capability of one of ordinary skill in the art. The figures provide additional exemplary details regarding the present invention. It should also be appreciated that these exemplary embodiments are provided as non-limiting examples only.

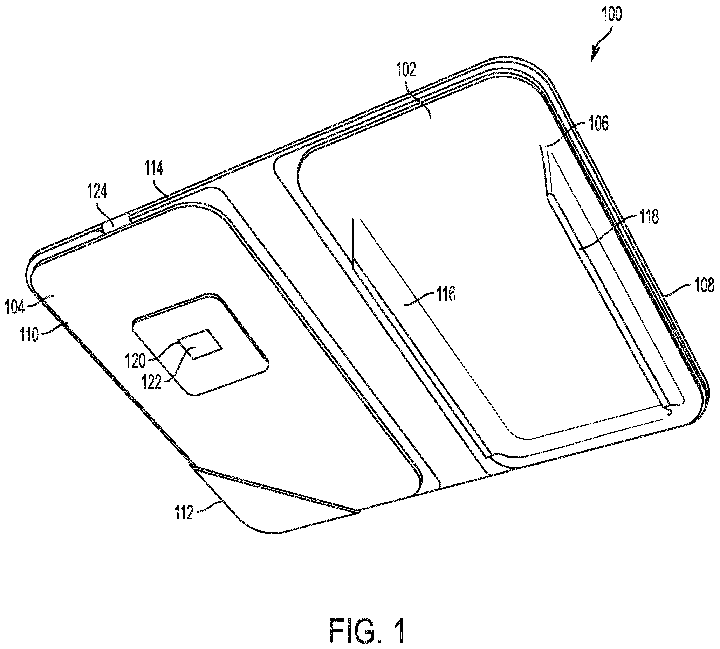

Several embodiments of the present invention and their advantages may be understood by referring to Figures 1-3.

Figure 1 depicts a front perspective view of folio 100 having back cover 102 and front cover 104 according to one embodiment. Front cover 104 may be movably connected (e.g., hingeably connected) to back cover 102 in one embodiment. Back cover 102 may comprise interior surface 106 and exterior surface 108 opposite one another. Front cover 104 may comprise interior surface 110 and exterior surface 112 opposite one another, and edge 114 between interior surface 110 and exterior surface 112.

Folio 100 of Figure 1 is shown in an open position, in which interior surface 110 of front cover 104 is away from interior surface 106 of back cover 102. When folio 100 is in a closed position, interior surface 110 of front cover 104 may be directly opposite interior surface 106 of back cover 102 if no point-of-sale (POS) device (not shown in Figure 1) is placed within folio 100.

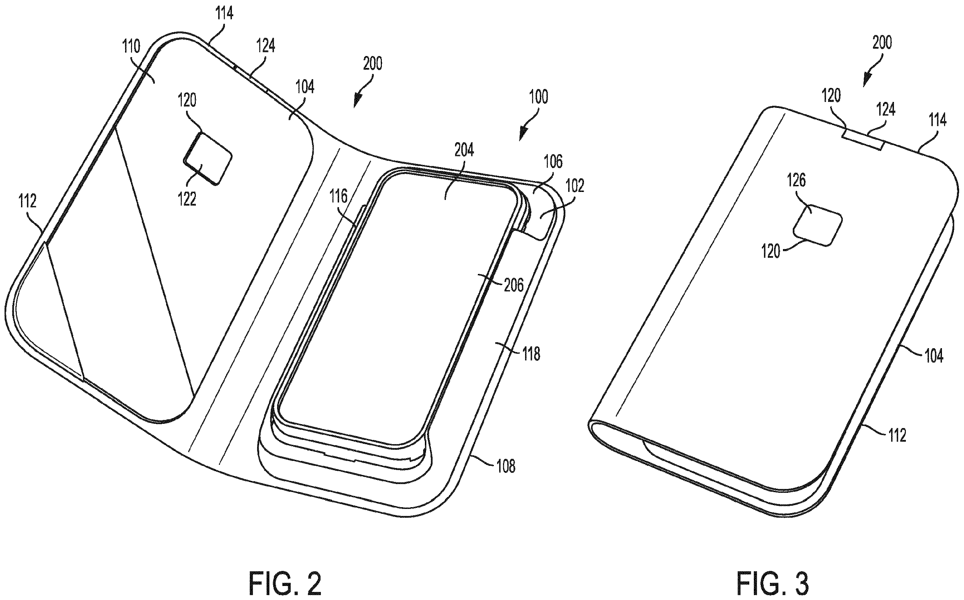

In one embodiment, folio is designed to support the inclusion of a POS device (e.g. mPOS or otherwise portable POS device). In one such embodiment, the POS device is built into the folio device such that the folio and POS device are a unitary product. In another such device, as shown in Figure 2, the interior surface 106 of back cover 102 may be configured to receive POS device 204 or a similar device, such as a wireless phone, pad, or the like. In one embodiment, folio 100 may further include one or more optional supports 116 and 118 on interior surface 106 of back cover 102 to allow POS device to be inserted into and extracted from folio 100 and to hold POS device 204 in place or otherwise engage with POS device 204. In another embodiment, POS device 204 may be an integral part of folio 100.

In another embodiment, POS device may be attached to or detached from interior surface 106 of back cover 102 without supports 116 and 118 as shown in Figure 1, by using various means such as adhesive, hook and loop fasteners, buttons, magnetic attraction, a dock, a pocket or sleeve, or by any other suitable mechanism.

In one embodiment, light guide 120 may be provided in front cover 104 of folio 100. In one embodiment, light guide 120 has light receiving portion 122 and light emitting portion 124. In one embodiment, light guide 120 may be an integral part of front cover 104 of folio 100. In another embodiment, light guide 120 may be separate from the folio cover. The separate light guide may then be placed in a sleeve or pocket of front cover 104. When the light guide is a separate piece, the light guide may be secured to the interior surface of the folio cover in any reasonable manner, such as via adhesive, pockets into which multiple corners or edges of the guide may be inserted, straps, etc. In one embodiment, light receiving portion 122 of light guide 120 may be aligned with a screen or light source 206 of POS device 204 (shown in Figure 2) to receive light emitted by POS device. In one embodiment, light emitting portion 124 is located proximal to one or more edges of front cover 104 such that light emitted from light emitting portion 124 is visible when folio 100 is in a closed position.

In one embodiment, light guide 120 may comprise glass, plastic, optical waveguide, or the like. In one embodiment, light guide 120 may comprise edge glow glass such that light emitted from light emitting portion 124 or 126 of light guide 120 would be highly visible to server when folio 100 is closed and placed on restaurant dining table or bar counter, for example.

In one embodiment, light emitting portion 124 of light guide 120 may be located on or proximal to edge 114 of front cover 104. In another embodiment, light emitting portion 124 of light guide 120 may be located on or proximal to exterior surface 112 of front cover 104 (not shown in Figure 1). In another embodiment, light emitting portion 124 of light guide 120 may be positioned at a combination of the foregoing locations, or at any other location as is necessary and/or desired. For example, light emitting portion 124 of light guide 120 may be located at one or more corners of front cover 104 of folio 100, at multiple edges of front cover 104, or at one or more locations on exterior surface 112 of front cover 104, to allow the light to be visible from multiple vantage points.

In one embodiment, light guide 120 may be configured to convey light of at least two colors transmitted by screen or light source 206 of POS device 204 (shown in Figure 2). In one embodiment, POS device 204 may transmit light of first color to indicate that a payment has been made, or light of second color different from first color to indicate that a payment has not been made. In other embodiments, light guide 120 may be configured to transmit one or more additional colors to indicate other status, for example, partial payment, customer request, POS status (e.g., low battery) or malfunction, or the like. Light guide 120 may be made of any material suitable for transmission of light of at least two colors.

Figure 2 depicts a front perspective view of apparatus 200 which includes folio 100 and POS device 204 in a partially open position according to one embodiment. In one embodiment, POS device 204 may be inserted into or extracted from back cover 102 of folio 100 through supports 116 and 118, as shown in Figure 2. In another embodiment, POS device 204 may be attached to or detached from interior surface 106 of back cover 102 directly, by using various means such as adhesive, hook and loop fasteners, buttons, magnetic attraction, a dock, a pocket or sleeve, or by any other suitable mechanism. In another embodiment, POS device 204 may be built into folio 100 such that POS device 204 and folio 100 are a unitary device.

In one embodiment, POS device 204 may include light source 206 which is configured to emit light indicative of whether a payment has been made. In one embodiment, light source 206 may comprise a display screen, light emitting diode (LED), or other type of light source capable of emitting at least two colors. For example, light source 206 may emit green light to indicate that a payment has been made, or red light to indicate that a payment has not been made. After a payment is made, POS device 204 may change the color of the background of the screen to green (or any other desired color) such that when the folio is in the closed position the light guide emits a green light at its light emitting portions. Alternatively, other colors may be used to indicate payment or non-payment. In another embodiment, one or more distinct colors may be generated by light source 206 of POS device 204 for indicating other status, for example, partial payment, customer request, or the like. In another embodiment, POS device 204 may detect that folio 100 is in the closed position, e.g. there may be an indicator integrated into the folio (e.g. a magnet, RFID tag, etc.) or the POS device may be designed to sense the closure without any specific indicator in the folio (e.g. use a camera or light detector to observe whether the cover is closed). Upon sensing that folio 100 is in the closed position, POS device 204 may use its display as a light source for the light guide (e.g. by turning on and causing the display to be green).

In one embodiment, light receiving portion 122 of light guide 120 is positioned to receive light indicative of status, for example, whether a payment has been made, from light source 206 of POS device 204. In one embodiment, light emitting portion 124 of light guide 120 may be positioned on or proximal to edge 114 of front cover 104, as shown in Figure 2. In another embodiment, light emitting portion 124 of light guide 120 may be positioned on or proximal to exterior surface 112 of front cover 104 (not shown in Figure 2). In another embodiment, light guide 120 may extend beyond edge 114 of front cover 104 of folio 100 to make light emitting portion 124 of light guide 120 more visible. In one embodiment, light receiving portion 122 of light guide 120 may be designed to be similar in size or shape of screen or light source 206 of POS device 204, such that amount of light collected by light guide 120 may be maximized. In one embodiment, light receiving portion 124 of light guide 120 may be positioned to substantially cover or be covered by the surface of the screen or light source 206.

Figure 3 depicts a front perspective view of apparatus 200 in a closed position according to one embodiment. In one embodiment, light emitting portion 124 of light guide 120 may be located on or proximal to edge 114 of front cover 104. In another embodiment, light emitting portion 126 of light guide 120 may be located on or proximal to exterior surface 112 of front cover 104. In yet another embodiment, light guide 120 may have ends 124 and 126 on edge 114 and exterior surface 112 of front cover 104, respectively. Light emitting portion 124 or 126 of light guide 120 may be positioned at one or more selected locations on edge 114 or exterior surface 112 of front cover 104 of folio 100 for utilitarian or aesthetic reasons.

In one embodiment, POS device may comprise touchscreen device, keyboard-and-screen device, wireless device, rechargeable device, or the like.

Although multiple embodiments are disclosed, it should be recognized that these embodiments are not exclusive to one another, and features of one embodiment may be applied to the others as necessary and/or desired.

It will be appreciated by those skilled in the art that the various embodiments are not limited by what has been particularly shown and described hereinabove. Rather the scope of the various embodiments includes both combinations and sub-combinations of features described hereinabove and variations and modifications thereof which are not in the prior art. It should further be recognized that these various embodiments are not exclusive to each other.

It will be readily understood by those persons skilled in the art that the embodiments disclosed here are susceptible to broad utility and application. Many embodiments and adaptations other than those herein described, as well as many variations, modifications and equivalent arrangements, will be apparent from or reasonably suggested by the various embodiments and foregoing description thereof, without departing from the substance or scope of the above description.

Accordingly, while the various embodiments have been described here in detail in relation to exemplary embodiments, it is to be understood that this disclosure is only illustrative and exemplary and is made to provide an enabling disclosure. Accordingly, the foregoing disclosure is not intended to be construed or to limit the various embodiments or otherwise to exclude any other such embodiments, adaptations, variations, modifications or equivalent arrangements.

## Claims

1. **Folio** (100), comprising:
a back cover (102) comprising an interior surface (106) and an exterior surface (108);
a front cover (104) movably connected to the back cover (102), the front cover (104) comprising an interior surface (110), an exterior surface (112), and at least one edge (114), the interior surface (110) of the front cover (104) disposed opposite the interior surface (106) of the back cover (102) when the folio (100) is in a closed position; and
a light guide (120) comprising a light receiving portion (122) proximal to the interior surface (110) of the front cover (104) and a light emitting portion (124) visible when the folio (100) is in the closed position;
wherein the light receiving portion (122) is configured to receive light from a light source (206).

2. Folio (100) of claim 1, wherein the light emitting portion (124) of the light guide (120) is located proximal to the at least one edge (114) of the front cover (104).

3. Folio (100) of claim 1 or 2, wherein the light emitting portion (124) of the light guide (120) is located proximal to the exterior surface (112) of the front cover (104).

4. Folio (100) of any one of claims 1 to 3, wherein the light emitting portion (124) of the light guide (120) is configured to emit light of a first color to indicate that a payment has been made or a second color to indicate that a payment has not been made.

5. Folio (100) of any one of claims 1 to 4, wherein the interior surface (106) of the back cover (102) is configured to receive a point-of-sale (POS) device (204).

6. Folio (100) of claim 5, wherein the light receiving portion (122) of the light guide (120) is positioned to receive from the POS device (204) light indicative of whether a payment has been made.

7. Folio (100) of any one of claims 1 to 6, wherein the light source (206) comprises a screen.

8. Folio (100) of any one of claims 1 to 7, wherein the light source (206) comprises a light emitting diode (LED).

9. **Apparatus** (200), comprising:
a back cover (102) comprising an interior surface (106) and an exterior surface (108);
a point-of-sale (POS) device (204) on the interior surface (106) of the back cover (102), the POS device (204) comprising a light source (206);
a front cover (104) movably connected to the back cover (102), the front cover (104) comprising an interior surface (110), an exterior surface (112), and at least one edge (114), the interior surface (110) of the front cover (104) disposed opposite the POS device (204) when the folio (100) is in a closed position; and
a light guide (120) comprising a light receiving portion (122) proximal to the POS device (204) when the folio (100) is in the closed position and a light emitting portion (124) visible when the folio (100) is in the closed position;
wherein the light receiving portion (122) is configured to receive light from the light source (206).

10. Apparatus (200) of claim 9, wherein the light emitting portion (124) of the light guide (120) is located proximal to the edge (114) of the front cover (104).

11. Apparatus (200) of claim 9 or 10, wherein the light emitting portion (124) of the light guide (120) is located proximal to the exterior surface (112) of the front cover (104).

12. Apparatus (200) of any one of claims 9 to 11, wherein the light emitting portion (124) of the light guide (120) is configured to emit light of a first color to indicate that a payment has been made or a second color to indicate that a payment has not been made.

13. Apparatus (200) of any one of claims 9 to 12, wherein the light receiving portion (122) of the light guide (120) is positioned to receive from the POS device (204) light indicative of whether a payment has been made.

14. Apparatus (200) of any one of claims 9 to 13, wherein the light source (206) comprises a screen.

15. Apparatus (200) of any one of claims 9 to 14, wherein the light source (206) comprises a light emitting diode (LED).
